# EUROPÄISCHE PATENTANMELDUNG

(11) **EP 1 942 082 A1**
(43) Veröffentlichungstag der Anmeldung: **09.07.2008**
(21) Anmeldenummer: 07122520.5
(22) Anmeldetag: 06.12.2007
(51) Int. Cl.: C03B 33/033

(54) **Verfahren und Vorrichtung zum Brechen von Dünnglasscheiben**

(30) Priorität: 05.01.2007 DE 102007001133
(71) Anmelder: MDI Schott Advanced Processing GmbH, 55120 Mainz (DE)
(72) Erfinder: Hoetzel, Bernd Christoph, 55286 Wörrstadt (DE)
(74) Vertreter: Fuchs

(57) **Zusammenfassung**

Es wird ein Verfahren und eine Vorrichtung zum Brechen von Dünnglasscheiben, insbesondere von Verbund- und Sandwichscheiben (Doublesheets) beschrieben, bei dem das geritzte Glas mit der Ritzseite auf einen Glasschneidetisch gelegt wird, der mit einer elastischen Auflage versehen ist. Die Scheiben werden durch Unterdruck auf dem Glasschneidetisch fixiert und durch einen Druck mit einem Brechschwert auf die nicht geritzte Seite gebrochen. Die elastische Auflage hat eine Härte von 60 bis 100 Shore A und eine Rückprallelastizität von 35 % bis 70 % gemäß DIN 53 512.

## Beschreibung

Die Erfindung betrifft ein Verfahren und eine Vorrichtung zum Brechen von Dünnglasscheiben, insbesondere von Sandwich-Scheiben (Doublesheets) für Flüssigkristall-Anzeigevorrichtungen.

Dünnglasscheiben finden hauptsächlich Verwendung in Flüssigkristall-Anzeigevorrichtungen. Für diesen Zweck werden die in einer Glasziehanlage (z.B. Floatglasanlage) hergestellten großen Glasscheiben in kleinere Einheiten gewünschter Größe zur Nutzung geteilt.

Weiterhin werden auch Scheiben, die mit einer Vielzahl von Flüssigkristallanzeige-Zellen versehen sind, in die einzelnen Flüssigkristallanzeige-Zellen zerlegt.

Das Trennen (Brechen) von Glasscheiben erfolgt in der Regel in zwei Schritten. Im ersten Schritt wird in der Glasscheibe eine kontrollierte Störung bzw. Fehlstelle, z.B. eine Kerbe, erzeugt und im zweiten Schritt wird die Fehlstelle zum Zerteilen des Glases erweitert. Das Herstellen der Fehlstelle kann durch ein beliebiges Mittel erfolgen, das einen Riss einleitet oder erzeugt. Die Fehlstelle kann als Ritz mittels eines Diamanten oder mit einem Trennrädchen erzeugt werden oder aber als Spannungslinie mittels eines Laserstrahls. Die Fehlstelle wird anschließend in der Regel durch Biegen unter Ausüben einer Spannung bis zur Trennung der Glasscheibe erweitert.

Aus JP 63-166734 ist ein Verfahren zum Trennen von Dünnglas bekannt, bei dem eine Glasscheibe mit einer Ritzlinie auf einem Brechtisch positioniert und dort mittels Unterdruck fixiert wird. Zwischen Glasscheibe und Brechtisch ist eine elastische Platte angeordnet. Mittels eines hydraulischen Elements wird von oben Druck auf die Ritzlinie auf der Glasscheibe ausgeübt und die Scheibe wird entlang der Ritzlinie getrennt.

JP 04 238827 A beschreibt eine Vorrichtung zum Trennen von Glassubstraten für Flüssigkristall-Zellen. Das Glassubstrat wird mit der geritzten Seite nach unten auf einen Brechtisch gelegt, dort mit Unterdruck fixiert und durch hohen Druck von oben auf die Trennlinie gebrochen.

JP 2004131341 A beschreibt ebenfalls das Trennen von Glas, insbesondere von sandwichartig aufgebauten Glassubstraten mit einer Vielzahl von Flüssigkeitskristall-Zellen. Diese Substrate sind, ebenso wie in JP 04 238827 A sandwichartig aufgebaut. Das Substrat wird geritzt und danach mit dem Ritz nach unten auf eine Gummiplatte gelegt. Zwischen Gummiplatte und Glas befindet sich noch eine Platte aus Eisen oder rostfreiem Stahl um die Gummiplatte vor Verschleiß und vor oberflächlichen Beschädigungen zu schützen. Aufgrund ihrer glatten Oberfläche dient sie auch dazu, ein etwaiges Anhaften des Glases an der Gummischicht infolge zu hoher Adhäsion zu verhüten, da dieses die Güte des Schnitts vermindert und zu Ausschluss führen kann.

Es sind auch Vorrichtungen bekannt, die anstelle einer Platte aus rostfreiem Stahl eine Schicht aus porösen Fluorpolymer (z.B. Polytetrafluorethylen (PTFE), fluoriniertes Ethylen-propylen-Copolymer (FEP), Perfluoralkoxiharz (PFA), Tetrafluorethylen-Ethylen-Copolymer (ETFE), Polyvinylfluorid (PVF), Polyvinylidenfluorid (PVDF), Chlrotrifluorethylen-Vinylidenfluorid-Copolymer, Chlortrifluorethylen-Ethylen-Copolymer (ECTFE) und dergleichen) besitzen. Die Schicht kann vorliegen als gegebenenfalls offenporige Sinterfolie, poröse Sinterplatte, Vlies, Gewebe und dergleichen. Das Fluorpolymer kann auch noch zusätzlich zu der Metallplatte Verwendung finden, um den Kontakt zwischen Glas und Metallplatte zu vermeiden. Das Glassubstrat wird auf dem Glasschneidetisch mittels Unterdruck fixiert. Zu diesem Zweck sind die Gummiplatte sowie die Metallplatte und das Fluorpolymer mit Öffnungen versehen, durch die der Unterdruck auf das Glassubstrat wirken kann.

Es hat sich jedoch gezeigt, dass diese Brechverfahren nicht immer zufrieden stellende Ergebnisse liefern, insbesondere wenn in Sandwich-Glasscheiben (Doublesheets) zwei dicht nebeneinander liegende Schnitte ausgeführt werden müssen. Solche Schnitte sind erforderlich, um größere Arrays von Flüssigkristall-Zellen in die einzelnen Zellen aufzutrennen, d.h. zu vereinzeln, wobei die einzelnen Zellen nach dem Trennvorgang eine beispielsweise in JP 04 238827, Fig. 6 gezeigte Form haben.

Die Aufgabe der Erfindung besteht darin, ein Verfahren sowie eine Vorrichtung zum Brechen von Dünnglasscheiben, insbesondere von Sandwich-Scheiben zu finden, durch die vor allem bei nahe beieinander liegenden Schnitten ein sauberes Brechen der Scheiben ermöglicht und mit dem bzw. der weniger Ausschuss produziert wird.

Diese Aufgabe wird mittels des beanspruchten Verfahrens sowie der beanspruchten Vorrichtung gelöst.

Es konnte gefunden werden, dass der Schlüssel zu den verbesserten Ergebnissen in der elastischen Unterlage für die zu brechende Scheibe liegt.

Benutzt man eine Unterlage aus einem Elastomer mit einer Härte von 60 bis 100 Shore A und einer Rückprallelastizität von 35 % bis 70 % gemäß DIN 53 512, so werden die verbesserten Ergebnisse erreicht. Bevorzugt wird, wenn die Unterlage eine Härte von 70 bis 90 Shore A und/oder eine Rückprallelastizität von 40 % bis 60 % gemäß DIN 53 512 besitzt.

Die Erfindung wird anhand der Zeichnungen weiter erläutert. Es zeigen:
- Fig. 1: eine Sandwich-Scheibenanordnung (Doublesheet) mit 36 TFT-Zellen, die vereinzelt werden müssen;
- Fig. 2: zeigt schematisch einen Brechtisch mit aufgelegtem und geritztem TFT-Array;
- Fig. 3: zeigt einen Schnitt durch eine vereinzelte TFT-Zelle.

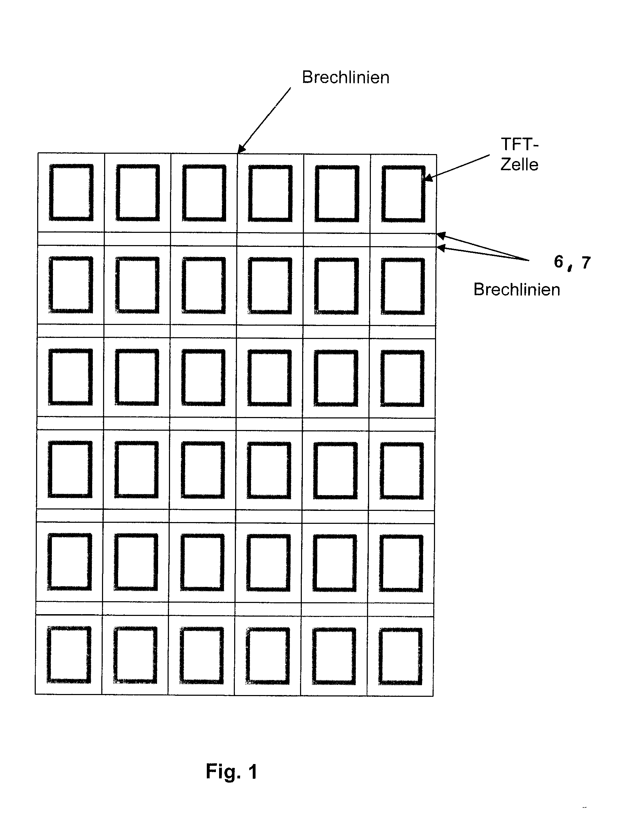

Fig. 1 zeigt schematisch eine Aufsicht auf die CF-Glas-Seite einer aus zwei Scheiben bestehenden Sandwichanordnung, die ein Array von 36 einzelnen Flüssigkristall-Zellen enthält. Kleinere Flüssigkristall-Zellen werden aus fertigungstechnischen Gründen nicht einzeln zusammengesetzt, sondern man erzeugt eine Vielzahl von einzelnen Flüssigkristall-Zellen zwischen zwei großformatigen Scheiben mit Abmessungen von gegenwärtig bis zu 120 x 120 cm².

Die Flüssigkristall-Zellen bzw. das aus mehreren Scheiben bestehende Array ist aufgebaut aus einer Scheibe, die die elektrischen Einrichtungen zum Ansteuern der Flüssigkristalle trägt, z.B. die Dünnfilm-Transitoren (TFT) und die elektrischen Zuleitungen dazu und einer Deckscheibe aus CF-Glas (CF = Colour filter). Zwischen den Scheiben sind die einzelnen Flüssigkristall-Zellen, z.B. TFT-Zellen angeordnet, deren Abmessungen durch die breiten dunklen Ränder der einzelnen Zellen gebildet wird. Diese Ränder bilden gleichzeitig die Verklebung der beiden Scheiben und dichten die Zellen, in denen sich - die Flüssigkristalle befinden, gegenüber der Umgebung ab. In Fig. 1 ist die Aufsicht auf die CF-Seite mit den vorgesehenen Ritz- bzw. Brechlinien gezeigt.

Das Vereinzeln des Arrays in einzelne Zellen erfolgt in mehreren Schritten. Zunächst wird die CF-Seite entsprechend den vorgesehenen Brechlinien geritzt. Das kann im Prinzip auf jede bekannte Art und Weise erfolgen, insbesondere mit einem Ritzdiamanten oder einem Ritzrädchen. Für das Ritzen von Dünnglas und Sandwich-Scheiben (Verbundscheiben), die Arrays aus Flüssigkristall-Zellen tragen, findet Dünnglas mit Stärken von unter 1,2 mm, insbesondere von 0,2 bis 1,1 mm Verwendung. In den Flüssigkristall-Zellen haben die Scheiben einen Abstand von ca. 0,004 bis 0,015 mm zueinander.

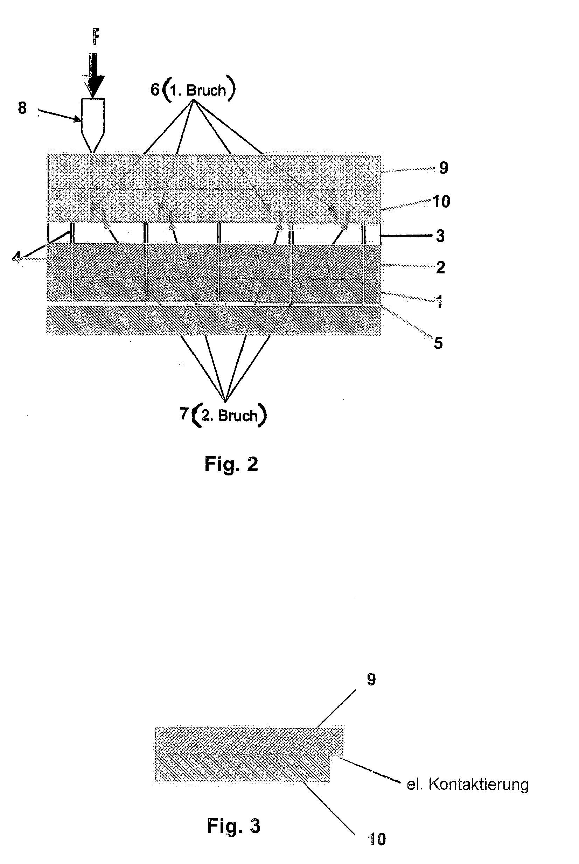

Nach dem Ritzen wird der Scheibenverbund gedreht und mit der geritzten Seite nach unten auf den Glasschneidetisch gelegt. Ein Ausschnitt aus einem Glasschneidetisch mit aufgelegter Verbundglasscheibe ist schematisch in Fig. 2 dargestellt.

Der Brechtisch besteht aus einer ebenen, verwindungsfreien Metallplatte 1, auf der die Platte aus Elastomer, das so genannte Brechgummi 2, angeordnet ist. Die Platte 2 hat eine Dicke von 1 bis 5 mm, bevorzugt 2 bis 4 mm. Bei einer größeren Dicke als 5 mm ergibt sich kein zusätzlicher positiver Effekt mehr, es steigen lediglich die Materialkosten für das Elastomer, bei einer Dicke von weniger als 1 mm kann mitunter das Trennergebnis schlechter werden, da der elastische Verformungsweg nicht mehr ausreicht. Für ein gutes Trennergebnis ist es ferner vorteilhaft, wenn die Oberfläche des Brechgummis möglichst plan ist. Als Anhaltspunkt kann angegeben werden, dass bei einer Abweichung von der Planizität in der Oberfläche, z.B. durch Dickenschwankungen oder Welligkeit, von bevorzugt 0,1 mm oder weniger, insbesondere 0,02 bis 0,06 mm, gute Ergebnisse erzielt werden können. Eine Abweichung von bis zu 0,2 mm ist in der Regel noch brauchbar, wenn die Wellenlänge der Abweichung groß genug ist, d.h. wenn das Glas aufgrund seiner Biegsamkeit der Oberflächenabweichungen folgen kann. Mitunter sind auch noch größere Oberflächenabweichungen tolerierbar. Im Einzelfall kann der Fachmann in einem Vorversuch leicht feststellen, ob die Verwendung der vorgesehenen Platte aus Elastomer mit ihren speziellen Materialeigenschaften im Zusammenspiel mit der zu trennenden Glasplatte zu einem zufrieden stellenden Ergebnis führt. Für ein gutes Brechergebnis ist es vorteilhaft, wenn bei einer hohen Härte des Brechgummis auch eine besonders gute Planizität gewählt wird. So sollte bei einer Shore A-Härte von 90 eine Abweichung von der Planizität von etwa 0,02 bis 0,05 mm gewählt werden. Wegen seiner guten mechanischen Eigenschaften und wegen der hohen Verschleißfestigkeit wird für die elastische Unterlage (Brechgummi) ein Polyurethan-Elastomer bevorzugt. Solche PUR-Elastomere sind z.B. durch Polyaddition aus Polydiolen oder Polyestern und Diisocyanaten herstellbar und werden von zahlreichen Herstellern angeboten. Besonders bekannt sind die unter der Marke Vulkollan^{®} angebotenen Erzeugnisse.

Zwischen der elastischen Schicht und der Glas-(Verbund-)Scheibe, bestehend aus der TFT-Scheibe 9 und der CF-Scheibe 10, ist noch in an sich bekannter Weise eine Schicht aus einem Fluorpolymer 3 angebracht. Es kann auch ein Edelstahlblech Verwendung finden. Bevorzugt wird jedoch eine Schicht aus Fluorpolymer, wie sie aus dem Stand der Technik bekannt ist, insbesondere eine Schicht aus Polytetrafluorethylen.

Die Platte aus Elastomer ist mit Löchern 4 versehen, die Fluorpolymer-Schicht ebenfalls, bzw. es wird eine offenporige Schicht oder ein Gewebe verwendet. Dadurch kann über entsprechende Leitungen 5 in der Metallplatte 1 ein Unterdruck an die aufliegende Glasplatte gelegt werden.

Nachdem die Glasplatte auf dem Brechtisch durch Unterdruck fixiert ist, wird mittels eines Brechschwertes 8 in an sich bekannter Weise ein Druck F auf die Glasplatte gegenüber den Ritzlinien 6 und 7 ausgeübt, wodurch die geritzte Glasplatte entlang der Ritzlinie bricht. Das Brechschwert kann zur Schonung von Glas und Brechschwert in an sich bekannter Weise noch mit einem Überzug eines Fluorpolymers, z.B. einem Gewebe, versehen sein. Bei Verbundscheiben wird anschließend die andere Glasscheibe geritzt, der Scheibenverbund wird erneut gedreht, so dass die geritzte Scheibe mit dem Ritz nach unten auf dem Brechtisch aufliegt und diese Scheibe wird dann durch Aufdrücken des Trennschwertes ebenfalls gebrochen.

Nachdem beide Scheiben des Scheibenverbundes gebrochen sind, können die einzelnen Displays vereinzelt werden.

Ein einzelnes Display ist in Fig. 3 gezeigt. Das Display besteht aus dem Deckglas (CF-Glas) 10 und dem TFT-Glas 9, von dem aus die Ansteuerung der Flüssigkristalle erfolgt. Das TFT-Glas springt gegenüber dem CF-Glas geringfügig vor. Dadurch können die sich auf dem TFT-Glas befindlichen elektrischen Leiterbahnen der Zelle mit der restlichen Ansteuerelektronik elektrisch verbunden werden.

Wegen des häufig nur begrenzt zur Verfügung stehenden Platzes für ein Display ist es wichtig, die Nutzfläche eines Displays möglichst groß zu halten, d.h., dass die für die elektrische Kontaktierung zur Verfügung stehenden Ränder möglichst klein zu halten sind. Dazu müssen die beiden Trennschnitte auf dem CF-Glas möglichst nahe beieinander liegen können. Mit dem vorliegenden Verfahren bzw. der Vorrichtung ist es möglich, auch noch zuverlässig und mit hoher Ausbeute saubere Schnitte durchzuführen, wenn die beiden Schnittlinien nur noch einen Abstand von 1,5 bis 2 mm besitzen.

### Beispiel

Auf einem Brechtisch mit den Abmessungen 100 x 100 cm² wurden 50 Verbundglasscheiben-Arrays, die 400 Flüssigkristall-Zellen enthielten, in die einzelnen Zellen aufgeteilt (vereinzelt).

Der Brechtisch war mit einer 100 x 100 cm² großen und 3 mm dicken Polymerplatte aus einem Polyurethan-(PU-)Elastomer auf Basis von Polyester-Polyol und Naphtalen-1,5-Diisocyanat (NDI), das z.B. unter dem Namen Vulkollan^{®} D15 im Handel erhältlich ist, versehen. Das Polyurethan-Elastomer hatte eine Härte von 70 Shore A und eine Rückprallelastizität von 45 % nach DIN 53 512. Die Abweichung von der Planizität betrug 0,03 ± 0,02 mm. Die Elastomerschicht war mit einer 0,5 mm dicken porösen PTFE-Folie bespannt. Die Folie dient zum Schutz der PU-Platte und kann leicht ausgewechselt werden. Die PU-Platte war mit Bohrungen versehen, durch die ein Vakuum zur Fixierung der Glasscheibe an die Glasplatte angelegt werden konnte.

Die erste Seite der Verbundscheiben wurde geritzt und mit der geritzten Seite nach unten auf den Brechtisch gelegt, durch Unterdruck fixiert und anschließend wurde die geritzte Scheibe mittels eines Trennschwertes in an sich bekannter Weise gebrochen. Danach wurde die andere Seite der Verbundglasscheibe geritzt, die Verbundglasscheibe wurde gedreht und mit der geritzten Seite auf den Brechtisch gelegt, worauf die zweite Scheibe der Verbundglasscheibe gebrochen wurde.

Es entstanden einzelne Flüssigkristall-Zellen, wie sie beispielhaft in Fig. 3 gezeigt sind.

Aus den 50 Verbundglasscheiben-Arrays wurden 400 fehlerfreie Flüssigkristall-Zellen erzeugt, was einer Ausbeute von 100 Prozent entspricht.

### Vergleichsbeispiel

Das Beispiel wurde mit der gleichen Zahl identischer Verbundglasscheiben-Arrays wiederholt mit dem einzigen Unterschied, dass statt der PU-Platte eine Platte aus NBR Elastomer mit einer Härte von 70 Shore A und einer Rückprallelastizität von 20 % gemäß DIN 53 512 Verwendung fand. Aus den Verbundglasscheiben wurden 320 fehlerfreie Flüssigkristall-Zellen erzeugt, was einer Ausbeute von 80 Prozent entspricht.

## Patentansprüche

1. Verfahren zum Brechen von Dünnglasscheiben, insbesondere von Sandwich-Scheiben,
wobei die zu brechende Scheibe geritzt wird,
mit der geritzten Seite auf einen Brechtisch mit einer elastischen Unterlage gelegt wird und auf diesem mittels Unterdruck fixiert wird,
wonach auf die ungeritzte Seite der Scheibe gegenüber der Ritzlinie mittels eines Brechschwertes ein Druck ausgeübt wird, der zum Brechen der Scheibe entlang der Ritzlinie führt,
**dadurch gekennzeichnet,**
**dass** eine elastische Unterlage mit einer Härte von 60 bis 100 Shore A und einer Rückprallelastizität von 35 % bis 70 % gemäß DIN 53 512 verwendet wird.

2. Verfahren nach Anspruch 1, **dadurch gekennzeichnet, dass** eine elastische Unterlage mit einer Härte von 70 bis 90 Shore A verwendet wird.

3. Verfahren nach Anspruch 1 oder 2, **dadurch gekennzeichnet, dass** eine elastische Unterlage mit einer Rückprallelastizität von 40 % bis 60 % gemäß DIN 53 512 verwendet wird.

4. Verfahren nach wenigstens einem der Ansprüche 1 bis 3, **dadurch gekennzeichnet, dass** man eine elastische Unterlage mit einer Stärke von 1 bis 5 mm benutzt.

5. Verfahren nach wenigstens einem der Ansprüche 1 bis 4, **dadurch gekennzeichnet, dass** man eine elastische Unterlage mit einer Abweichung von der Planizität von maximal 0,2 mm, insbesondere maximal 0,1 mm auf ihrer dem Glas zugewandten Seite verwendet.

6. Vorrichtung zum Brechen von Dünnglasscheiben, insbesondere von Sandwich-Scheiben, bestehend aus einem Brechtisch zum Tragen der Glasscheibe, wobei der Brechtisch eine elastische Auflage auf seiner der mit einer Ritzlinie versehenden Glasscheibe zugewandten Seite besitzt, wobei die elastische Auflage mit Öffnungen zum Anlegen von Unterdruck zwecks Fixierung der Glasscheibe versehen ist und einem mit Abstand über dem Tisch angeordneten, absenkbaren Druckteil (Brechschwert), mit dem ein Druck auf die Glasscheibe ausübbar ist,
**dadurch gekennzeichnet,**
**dass** die elastische Auflage aus einem Elastomer und einer Härte von 60 bis 100 Shore A und einer Rückprallelastizität von 35 % bis 70 % gemäß DIN 53 512 besteht.

7. Vorrichtung gemäß Anspruch 6, **dadurch gekennzeichnet, dass** die elastische Auflage eine Härte von 70 bis 90 Shore A besitzt.

8. Vorrichtung nach Anspruch 6 oder 7, **dadurch gekennzeichnet, dass** die elastische Auflage eine Rückprallelastizität von 40 bis 60 gemäß DIN 53 512 besitzt.

9. Vorrichtung nach wenigstens einem der Ansprüche 6 bis 8, **dadurch gekennzeichnet, dass** die Auflage eine Stärke von 1 bis 5 mm, insbesondere 2 bis 4 mm, besitzt.

10. Vorrichtung nach wenigstens einem der Ansprüche 6 bis 9, **dadurch gekennzeichnet, dass** die Auflage auf ihrer der Glasscheibe zugewandten Seite eine Abweichung von der Planizität weniger als 0,2 mm, insbesondere weniger als 0,1 mm besitzt.
